# EUROPEAN PATENT SPECIFICATION

(11) **EP 3 015 298 B1**
(45) Date of publication and mention of the grant of the patent: **15.07.2020**
(21) Application number: 15192450.3
(22) Date of filing: 30.10.2015
(51) Int. Cl.: B60J 5/04

(54) **ATTACHMENT STRUCTURE OF DOOR IMPACT BAR**
BEFESTIGUNGSSTRUKTUR EINES TÜRAUFPRALLTRÄGERS
STRUCTURE DE FIXATION DE BARRE D'IMPACT DE PORTE

(30) Priority: 31.10.2014 JP 2014223067
(43) Date of publication of application: 04.05.2016
(73) Proprietor: Mitsubishi Jidosha Engineering K.K., Aichi 444-8501 (JP); Mitsubishi Jidosha Kogyo Kabushiki Kaisha, Tokyo 108-8410 (JP)
(72) Inventor: Tokumasu, Shinya, Tokyo, Tokyo 108-8410 (JP); Misaki, Toshitsugu, Tokyo, Tokyo 108-8410 (JP); Nagase, Takeshi, Tokyo, Tokyo 108-8410 (JP); Shuto, Hirotaka, Tokyo, Tokyo 108-8410 (JP); Naka, Hironori, Tokyo, Tokyo 108-8410 (JP); Suzuki, Katsuhiro, Tokyo, Tokyo 108-8410 (JP); Nakashima, Nobuhito, Okazaki-shi, Aichi (JP); Mashida, Mitsuhiro, Okazaki-shi, Aichi (JP)
(74) Representative: Vossius & Partner Patentanwälte Rechtsanwälte mbB

(56) References cited:
- WO-A1-2014/129335
- DE-A1- 19 755 935
- FR-A1- 2 943 978
- JP-A- 2001 030 756
- JP-A- 2008 105 450
- JP-A- 2011 225 013
- US-A1- 2002 063 443

## Description

### Technical Field

The present invention relates to an attachment structure of a door impact bar.

### Background Art

The inside of a vehicle door such as a front door or a rear door is provided with a door impact bar for absorbing an impact on a collision load and protecting a crew.

The door impact bar extends in a front-back direction of a vehicle, and the front and back ends of the door impact bar are attached to an inner panel of the door through brackets.

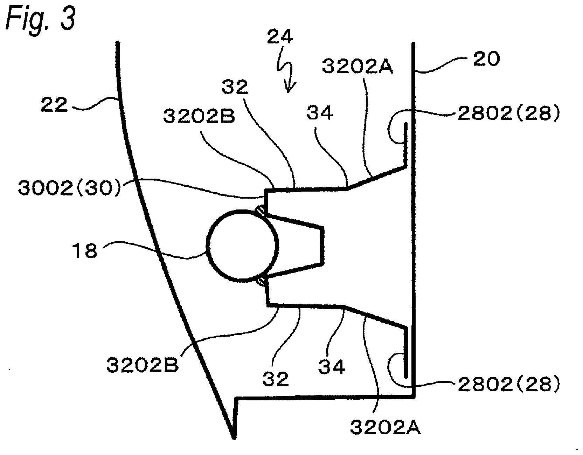

Patent Reference 1 (Figs. 3, 4 and 7) proposes a bracket for attaching a door impact bar to an inner panel of a door, the bracket having a base attached to the inner panel, a distal part to which an end of the door impact bar is attached, and a leg part which extends between the distal part and the base and makes connection between the distal part and the base.

JP 2001030756 A, a Japanese patent publication, refers to a side door for a vehicle. The door has an impact beam inside the door by constructing the impact beam with a hollow material and mounting a weight inside the impact beam.

### Citation List

### Patent Literature

[Patent Reference 1] JP-A-2006-76326

### Summary of Invention

### Technical Problem

Incidentally, the door impact bar is preferably arranged with the door impact bar brought near to an outer panel from the standpoint of reducing a fault value in a crew by preventing entrance into the vehicle room side of the door impact bar by a collision load at the time of broadside collision.

However, in the conventional art described above, the door impact bar is arranged with the door impact bar brought near to the outer panel of the door, with the result that a dimension of height of the leg part becomes larger as a distance between the inner panel and the outer panel becomes longer.

And, as the dimension of height of the leg part becomes larger, the leg part tends to fall using a place of connection to the base as a fulcrum by a lower collision load when the collision load at the time of broadside collision is applied from the outer panel to the door impact bar, and there is a limit to improvement in an impact absorption effect by the door impact bar.

The invention has been implemented in view of the circumstances described above, and an object of the invention is to provide an attachment structure of a door impact bar effective in improving an impact absorption effect by the door impact bar.

### Solution to Problem

In order to achieve the object described above, there is provided an attachment structure of a door impact bar, for attaching an end of the door impact bar to an inner panel, and the attachment structure comprising:
a bracket including a base which is attached to the inner panel, a distal part to which the end of the door impact bar is attached, and a leg part which extends between the distal part and the base and connects the distal part with the base,
wherein a deformation induction part, in which deformation is induced at the time of applying a collision load to the door impact bar, is provided an intermediate part of the leg part in an extension direction of the leg part.

The attachment structure of the door impact bar is configured such that
the base includes a pair of base bond pieces respectively welded to the inner panel in places separated in a first direction orthogonal to a longitudinal direction of the door impact bar with sandwiching the door impact bar therebetween, in viewed from the longitudinal direction of the door impact bar,
the distal part includes a distal part bond piece extending in the first direction, wherein the end of the door impact bar is welded to an intermediate part of the distal part bond piece in the first direction,
the leg part includes a pair of leg pieces respectively connecting both ends of the distal part bond piece in the first direction to ends of the pair of base bond pieces, and
the deformation induction parts are respectively formed in the intermediate parts of the pair of leg pieces in extension directions thereof.

The attachment structure of the door impact bar is configured such that
in the leg pieces, ends of a pair of base leg pieces connected to each of the base bond pieces are connected to ends of a pair of distal part leg pieces connected to both of the ends of the distal part bond piece,
the deformation induction parts are provided in places in which the ends of the pair of base leg pieces are connected to the ends of the pair of distal part leg pieces, and
the deformation induction parts may include bent parts bending and connecting the ends of the base leg pieces and the ends of the distal part leg pieces.

The attachment structure of the door impact bar may be configured such that
the bracket is formed by bending one steel plate having a width along the longitudinal direction of the door impact bar and a length orthogonal to this width in plural places spaced in the length direction, and the pair of base bond pieces, the pair of base leg pieces, the distal part bond piece, the pair of distal part leg pieces and the pair of deformation induction parts are formed in a line-symmetric shape in viewed from the longitudinal direction of the door impact bar.

### Advantageous Effects of Invention

According to the invention as described in claim 1, when a collision load by broadside collision is applied to the door impact bar through an outer panel of a door, the leg part of the bracket receives the collision load and when the collision load exceeds a predetermined value, deformation of the leg part is induced in places of the deformation induction parts and the leg part is deformed at the deformation induction parts as boundaries.

Consequently, the leg part does not fall using a place of connection to the base as a fulcrum in a conventional manner, and the bracket can support the door impact bar through the leg part, with the result that it becomes effective in improving an impact absorption effect by the door impact bar.

According to the invention, deformation of a pair of leg parts is induced with good balance by the deformation induction parts respectively formed on the pair of leg parts, with the result that the leg part can be prevented from falling using the place of connection to the base as the fulcrum, and it becomes effective in improving the impact absorption effect by the door impact bar.

According to the invention, the deformation induction part can be formed easily and it becomes effective in reducing a manufacturing cost of the bracket.

According to the invention as described in claim 3 the bracket can be processed easily and it becomes effective in reducing the manufacturing cost of the bracket.

### Brief Description of Drawings

Fig. 1 is a side view in the case where an inner panel of a vehicle door to which an attachment structure of a door impact bar of an embodiment is applied is viewed from the outside of a vehicle room.
Fig. 2 is a perspective view of a bracket of the attachment structure of the door impact bar of the embodiment.
Fig. 3 is a sectional view taken on line A-A of Fig. 1.
Fig. 4 is a sectional view taken on line A-A of Fig. 1, showing a deformed state of the bracket.

### Description of Embodiments

An embodiment of the invention will hereinafter be described with reference to the drawings.

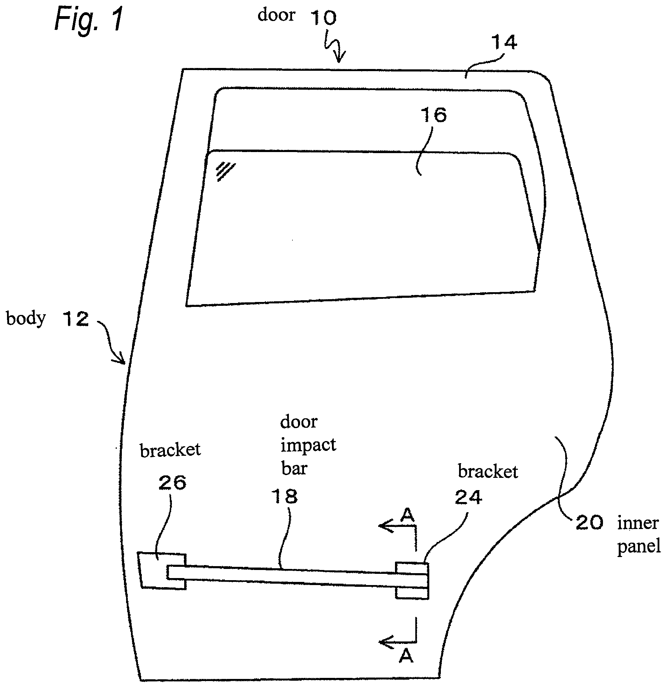

As shown in Fig. 1, the case of applying an attachment structure of a door impact bar to a rear door will be described in the present embodiment. In addition, the invention is not limited to the rear door, and can also be applied to a front door.

A door 10 is means for opening and closing a doorway of the side of a vehicle (not shown), and the door 10 is configured to include a door body 12, a window frame part 14 which is formed on an upper part of the door body 12 and forms a window opening, a window glass 16 for opening and closing the window opening by upward and downward movement, and a door impact bar 18.

The door body 12 and the window frame part 14 are integrally constructed by overlapping between a metallic inner panel 20 for forming a surface of the inside in a width direction of the vehicle and a metallic outer panel 22 (see Fig. 3) for forming a surface of the outside in the width direction of the vehicle.

The door impact bar 18 is made of metal and has a cylindrical shape and is arranged along a front-back direction of the vehicle, and the end of the door impact bar 18 is attached to the inner panel 20 through a bracket 24 according to the invention.

The case where the back end of the door impact bar 18 is attached to the inner panel 20 through the bracket 24 according to the invention will be described in the embodiment.

Also, the front end of the door impact bar 18 is attached to the inner panel 20 through a bracket 26 with various conventional known shapes different from the invention.

In addition, at least one of the front end and the back end of the door impact bar 18 has only to be attached through the bracket 24 according to the invention.

Also, a cross-sectional shape of the door impact bar 18 is not limited to the cylindrical shape, and various conventional known cross-sectional shapes can be used.

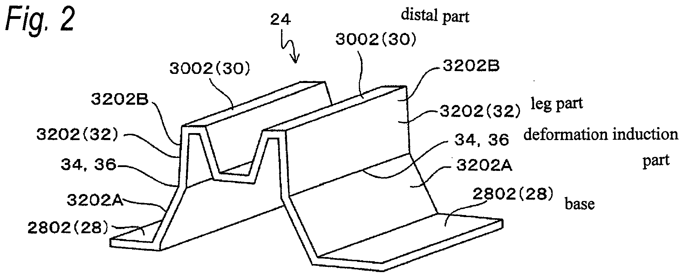

As shown in Figs. 1 to 3, one steel plate having a width along a longitudinal direction of the door impact bar 18 and a length orthogonal to this width is bent in plural places spaced in a length direction to thereby form the bracket 24.

The bracket 24 includes a base 28, a distal part 30, and a leg part 32.

The base 28 is a place attached to the inner panel 20.

The base 28 has a pair of base bond pieces 2802 respectively welded to the inner panel 20 in places separated in a direction (first direction) orthogonal to the longitudinal direction of the door impact bar 18 with the door impact bar 18 sandwiched in the case of viewing the door impact bar 18 in plan view.

The distal part 30 is a place to which the end of the door impact bar 18 is attached.

The distal part 30 has a V-shaped distal part bond piece 3002 extending in the direction (first direction) orthogonal to the longitudinal direction of the door impact bar 18, the distal part bond piece 3002 to which the end of the door impact bar 18 is welded in an intermediate part of its extension direction.

The leg part 32 is a place which extends between the distal part 30 and the base 28 and makes connection between the distal part 30 and the base 28.

The leg part 32 has a pair of leg pieces 3202 for respectively connecting both ends of the distal part bond piece 3002 in the extension direction to ends of the pair of base bond pieces 2802.

The leg pieces 3202 are constructed by connecting ends of a pair of base leg pieces 3202A connected to the base bond pieces 2802 to ends of a pair of distal part leg pieces 3202B connected to both ends of the distal part bond piece 3002.

An intermediate part of the leg part 32 in the extension direction is provided with a deformation induction part 34 in which deformation is induced at the time of applying a collision load to the door impact bar 18.

The deformation induction parts 34 are respectively formed in the intermediate parts of the pair of leg pieces 3202 in the extension direction, and are formed in places in which the ends of the pair of base leg pieces 3202A are connected to the ends of the pair of distal part leg pieces 3202B.

More specifically, the deformation induction parts 34 are constructed of bent parts 36 for bending and connecting the ends of the base leg pieces 3202A and the ends of the distal part leg pieces 3202B.

Also, the pair of base bond pieces 2802, the pair of base leg pieces 3202A, the distal part bond piece 3002, the pair of distal part leg pieces 3202B and the pair of deformation induction parts 34 are formed in a left-right symmetric (line-symmetric) shape in the case of being viewed from the longitudinal direction of the door impact bar 18.

Next, action and effect will be described.

As shown in Fig. 3, when a collision load by broadside collision is applied to the door impact bar 18 through the outer panel 22 of the door 10, the collision load applied to the door impact bar 18 is applied to the inner panel 20 through the distal part 30, the leg part 32 and the base 28 of the bracket 24.

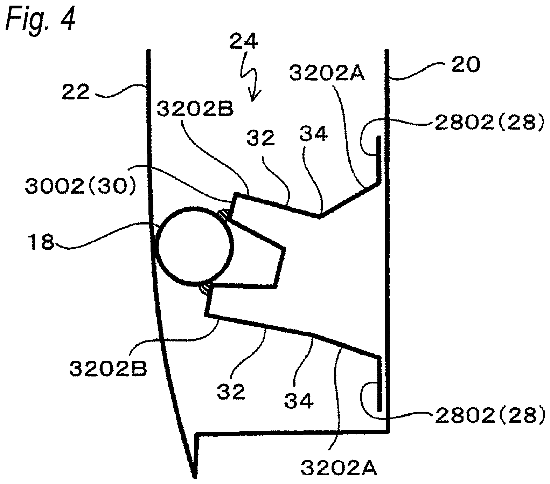

In this case, the leg part 32 of the bracket 24 receives the collision load and when the collision load exceeds a predetermined value, deformation of the leg part 32 is induced in places of the deformation induction parts 34 and as shown in Fig. 4, the pair of distal part leg pieces 3202B is deformed at the deformation induction parts 34 as the boundaries.

Consequently, the leg part 32 does not fall using a place of connection to the base 28 as a fulcrum in a conventional manner, and the bracket 24 can support the door impact bar 18 through the pair of base leg pieces 3202A. In other words, the bracket 24 is deformed, but the fall of the bracket 24 is prevented and the bracket 24 can support the door impact bar 18, with the result that it becomes effective in improving an impact absorption effect by the door impact bar 18.

Also, in the embodiment, deformation of a pair of leg parts 32 is induced with good balance by the deformation induction parts 34 respectively formed on the pair of leg parts 32, with the result that the leg part 32 can be prevented from falling using the place of connection to the base 28 as the fulcrum, and it becomes effective in improving the impact absorption effect by the door impact bar 18.

Also, the deformation induction part 34 can be formed by, for example, boring a hole in the bracket 24 or thinning a wall thickness of the bracket 24, but when the deformation induction part 34 is formed by the bent part 36 as described in the embodiment, the deformation induction part 34 can be formed easily and it becomes effective in reducing a manufacturing cost of the bracket 24.

Also, in the embodiment, the bracket 24 having the deformation induction parts 34 is formed by bending one steel plate, with the result that the bracket 24 can be processed easily and it becomes effective in reducing the manufacturing cost of the bracket 24.

### Reference Signs List

- 10: DOOR
- 18: DOOR IMPACT BAR
- 20: INNER PANEL
- 24: BRACKET
- 28: BASE
- 2802: BASE BOND PIECE
- 30: DISTAL PART
- 3002: DISTAL PART BOND PIECE
- 32: LEG PART
- 3202: LEG PIECE
- 3202A: BASE LEG PIECE
- 3202B: DISTAL PART LEG PIECE
- 34: DEFORMATION INDUCTION PART
- 36: BENT PART

## Claims

1. An attachment structure of a door impact bar (18), for attaching an end of the door impact bar (18) to an inner panel (20), and the attachment structure comprising:
a bracket (24) including a base (28) which is attached to the inner panel (20), a distal part (30) to which the end of the door impact bar (18) is attached, and a leg part (32) which extends between the distal part (30) and the base (28) and connects the distal part (30) with the base (28),
wherein the base (28) includes a pair of base bond pieces (2802) respectively welded to the inner panel (20) in places separated in a first direction orthogonal to a longitudinal direction of the door impact bar (18) with sandwiching the door impact bar (18) therebetween, in view from the longitudinal direction of the door impact bar (18),
the distal part (30) includes a distal part bond piece (3002) extending in the first direction, wherein the end of the door impact bar (18) is welded to an intermediate part of the distal part bond piece (3002) in the first direction, and
the leg part (32) includes a pair of leg pieces (3202) respectively connecting both ends of the distal part bond piece (3002) in the first direction to ends of the pair of base bond pieces (2802),
**characterised in that** deformation induction parts (34), in which deformation is induced at the time of applying a collision load to the door impact bar (18), are respectively formed in the intermediate parts of the pair of leg pieces (3202) in extension directions thereof;
in the leg pieces (3202), ends of a pair of base leg pieces (3202A) connected to each of the base bond pieces (2802) are connected to ends of a pair of distal part leg pieces (3202B) connected to both of the ends of the distal part bond piece (3002); and
the deformation induction parts (34) are provided in places in which the ends of the pair of base leg pieces (3202A) are connected to the ends of the pair of distal part leg pieces (3202B);
when the collision load is applied to the door impact bar (18), the bracket (24) is deformed at the deformation induction part (34) and supports the door impact bar (18) through the pair of base leg pieces (3202A).

2. The attachment structure of the door impact bar (18) according to claim 1, wherein the deformation induction parts (34) includes bent parts (36) bending and connecting the ends of the base leg pieces (3202A) and the ends of the distal part leg pieces (3202B).

3. The attachment structure of the door impact bar (18) according to claim 2, wherein the bracket (24) is formed by bending one steel plate having a width along the longitudinal direction of the door impact bar (18) and a length orthogonal to this width in plural places spaced in the length direction, and the pair of base bond pieces (2802), the pair of base leg pieces (3202A), the distal part bond piece (3002), the pair of distal part leg pieces (3202A) and the pair of deformation induction parts (34) are formed in a line-symmetric shape in view from the longitudinal direction of the door impact bar (18).

## Patentansprüche

1. Befestigungsstruktur für einen Türaufprallträger (18) zum Befestigen eines Endes des Türaufprallträgers (18) an einer Innenplatte (20), wobei die Befestigungsstruktur aufweist:
eine Halterung (24) mit einer Basis (28), die an der Innenplatte (20) befestigt ist, einem distalen Abschnitt (30), an dem das Ende des Türaufprallträgers (18) befestigt ist, und einem Schenkelabschnitt (32) der sich zwischen dem distalen Abschnitt (30) und der Basis (28) erstreckt und den distalen Abschnitt (30) mit der Basis (28) verbindet,
wobei die Basis (28) ein Paar von Basisverbindungsteilen (2802) aufweist, die jeweils an der Innenplatte (20) an Stellen angeschweißt sind, die in einer ersten Richtung orthogonal zu einer Längsrichtung des Türaufprallträgers (18) getrennt sind, wobei der Türaufprallträger (18), betrachtet von der Längsrichtung des Türaufprallträgers (18), dazwischen sandwichartig angeordnet ist,
der distale Abschnitt (30) ein Verbindungsteil (3002) des distalen Abschnitts aufweist, das sich in der ersten Richtung erstreckt, wobei das Ende des Türaufprallträgers (18) an einem Zwischenabschnitt des Verbindungsteils (3002) des distalen Abschnitts in der ersten Richtung angeschweißt ist, und
wobei der Schenkelabschnitt (32) ein Paar von Schenkelteilen (3202) aufweist, die beide Enden des Verbindungsteils (3002) des distalen Abschnitts in der ersten Richtung mit Enden des Paars von Basisverbindungsteilen (2802) verbinden,
**dadurch gekennzeichnet, dass**
Verformungsinduktionsabschnitte (34), bei denen zum Zeitpunkt des Ausübens einer Kollisionslast auf den Türaufprallträger (18) eine Verformung induziert wird, jeweils in den Zwischenabschnitten des Paars von Schenkelteilen (3202) in Erstreckungsrichtungen davon ausgebildet sind;
in den Schenkelteilen (3202) Enden eines Paars von Basisschenkelteilen (3202A), die mit jedem der Basisverbindungsteile (2802) verbunden sind, mit Enden eines Paars von Schenkelteilen (3202B) des distalen Abschnitts verbunden sind, die mit beiden Enden des Verbindungsteils (3002) des distalen Abschnitts verbunden sind; und
die Verformungsinduktionsabschnitte (34) an Stellen bereitgestellt sind, an denen die Enden des Paars von Basisschenkelteilen (3202A) mit den Enden des Paars von Schenkelteilen (3202B) des distalen Abschnitts verbunden sind,
wobei, wenn die Kollisionslast auf den Türaufprallträger (18) ausgeübt wird, die Halterung (24) am Verformungsinduktionsabschnitt (34) verformt wird und den Türaufprallträger (18) durch das Paar von Basisschenkelteilen (3202A) stützt.

2. Befestigungsstruktur für einen Türaufprallträger (18) nach Anspruch 1, wobei die Verformungsinduktionsabschnitte (34) gebogene Abschnitte (36) aufweisen, die die Enden der Basisschenkelteile (3202A) und die Enden der Schenkelteile (3202B) des distalen Abschnitts biegen und verbinden.

3. Befestigungsstruktur für einen Türaufprallträger (18) nach Anspruch 2, wobei die Halterung (24) durch Biegen einer Stahlplatte mit einer Breite entlang der Längsrichtung des Türaufprallträgers (18) und einer Länge orthogonal zu dieser Breite an mehreren in Längsrichtung beabstandeten Stellen gebildet wird, und wobei das Paar von Basisverbindungsteilen (2802), das Paar von Basisschenkelteilen (3202A), das Verbindungsteil (3202) des distalen Abschnitts, das Paar von Schenkelteilen (3202B) des distalen Abschnitts und das Paar von Verformungsinduktionsabschnitten (34) in der Längsrichtung des Türaufprallträgers (18) betrachtet in einer liniensymmetrischen Form ausgebildet sind.

## Revendications

1. Structure de fixation d'une barre d'impact de portière (18), pour fixer une extrémité de la barre d'impact de portière (18) sur un panneau interne (20), et la structure de fixation comprenant :
une console (24) qui inclut une base (28), laquelle est fixée au panneau interne (20), une partie distale (30) à laquelle l'extrémité de la barre d'impact de portière (18) est fixée et une partie de jambage (32) qui s'étend entre la partie distale (30) et la base (28) et qui connecte la partie distale (30) à la base (28) ;
dans laquelle la base (28) inclut une paire de pièces de liaison de base (2802) qui sont respectivement soudées sur le panneau interne (20) en des endroits qui sont séparés dans une première direction qui est orthogonale à une direction longitudinale de la barre d'impact de portière (18) tout en prenant en sandwich entre elles la barre d'impact de portière (18), tel que vu depuis la direction longitudinale de la barre d'impact de portière (18) ;
la partie distale (30) inclut une pièce de liaison de partie distale (3002) qui s'étend dans la première direction, dans laquelle l'extrémité de la barre d'impact de portière (18) est soudée sur une partie intermédiaire de la pièce de liaison de partie distale (3002) dans la première direction ; et
la partie de jambage (32) inclut une paire de pièces de jambage (3202) qui connectent respectivement les deux extrémités de la pièce de liaison de partie distale (3002) dans la première direction à des extrémités de la paire de pièces de liaison de base (2802) ;
**caractérisée en ce que** :
des parties d'induction de déformation (34), dans lesquelles une déformation est induite à l'instant de l'application d'une charge de collision sur la barre d'impact de portière (18), sont respectivement formées dans les parties intermédiaires de la paire de pièces de jambage (3202) dans leurs directions d'extension ;
au niveau des pièces de jambage (3202), des extrémités d'une paire de pièces de jambage de base (3202A) qui sont connectées à chacune des pièces de liaison de base (2802) sont connectées à des extrémités d'une paire de pièces de jambage de partie distale (3202B) qui sont connectées aux deux extrémités de la pièce de liaison de partie distale (3002) ; et
les parties d'induction de déformation (34) sont prévues au niveau d'endroits au niveau desquels les extrémités de la paire de pièces de jambage de base (3202A) sont connectées aux extrémités de la paire de pièces de jambage de partie distale (3202B) ;
lorsque la charge de collision est appliquée sur la barre d'impact de portière (18), la console (24) est déformée au niveau de la partie d'induction de déformation (34) et elle supporte la barre d'impact de portière (18) par l'intermédiaire de la paire de pièces de jambage de base (3202A).

2. Structure de fixation de la barre d'impact de portière (18) selon la revendication 1, dans laquelle les parties d'induction de déformation (34) incluent des parties fléchies (36) qui fléchissent et connectent les extrémités des pièces de jambage de base (3202A) et les extrémités des pièces de jambage de partie distale (3202B).

3. Structure de fixation de la barre d'impact de portière (18) selon la revendication 2, dans laquelle la console (24) est formée en fléchissant une plaque en acier qui présente une largeur suivant la direction longitudinale de la barre d'impact de portière (18) et une longueur qui est orthogonale à cette largeur en plusieurs endroits qui sont espacés dans la direction de longueur, et la paire de pièces de liaison de base (2802), la paire de pièces de jambage de base (3202A), la pièce de liaison de partie distale (3002), la paire de pièces de jambage de partie distale (3202B) et la paire de parties d'induction de déformation (34) sont formées selon une forme symétrique en termes de ligne, tel que vu depuis la direction longitudinale de la barre d'impact de portière (18).
